# EUROPEAN PATENT SPECIFICATION

(11) **EP 3 854 687 B1**
(45) Date of publication and mention of the grant of the patent: **07.12.2022**
(21) Application number: 20153858.4
(22) Date of filing: 27.01.2020
(51) Int. Cl.: B64D 11/00

(54) **AUDIO SYSTEM FOR A PASSENGER CABIN OF AN AIRCRAFT**
AUDIOSYSTEM FÜR EINE PASSAGIERKABINE EINES FLUGZEUGS
SYSTÈME AUDIO POUR UNE CABINE DE PASSAGERS D'UN AVION

(43) Date of publication of application: 28.07.2021
(73) Proprietor: Airbus Operations GmbH, 21129 Hamburg (DE)
(72) Inventor: Carmona-Puga, Guillermo, 21129 Hamburg (DE)
(74) Representative: Isarpatent

(56) References cited:
- US-A- 4 774 514
- US-A1- 2006 262 935
- US-A1- 2014 064 524
- US-A1- 2016 286 316
- US-A1- 2019 141 447
- US-B1- 10 106 080

## Description

The present invention pertains to an audio system for a passenger cabin of an aircraft and an aircraft having a passenger cabin equipped with such an audio system.

Typical passenger address (PA) systems supply various audio messages to a passenger cabin and a flight compartment of passenger aircraft. These audio messages comprise amongst others flight crew announcements, pre-recorded/stored announcements and/or messages, boarding music, chimes and so on. Most of the audio signals are usually pre-recorded and stored in an in-flight entertainment (IFE) system connected to or integrated in a cabin management system (CMS) of the respective aircraft. The CMS usually provides the control of the flight and cabin crew messages and chimes.

Current available solutions normally include the installation of standard speakers in passenger service units (PSU) in the overhead panel above the passenger seats in each row. Additional speakers may be installed in the lavatory and other cabin parts. Certain cabin areas or zones may be defined to limit the coverage of the audio in the cabin. However, common PA systems usually do not support wider personalization of the audio content provided to the passengers. In addition, control of the audio signal characteristics (e.g. volume, location etc.) can often only be customized to a limited extend across the cabin.

For example, the crew may preselect several types of audio content, which will then be played to the overall cabin or to designated cabin zones, the latter defining specific areas where the audio is played. Should the cabin communicate with the passengers in several languages, the crew and the pre-recorded audio files usually have to be repeated in these languages. Hence, there is generally a need for a personalized PA system where the audio content and volume for each passenger can be personalized such that the individualized audio messages for each passenger do not interfere with the audio content for the other passengers.

Document US2014064524 discloses an entertainment system including directional sound speakers associated with a media player of the entertainment system; and a directional sound controller associated with the directional sound speakers of the media player.

The directional sound controller is configured to direct a sound beam associated with the media player at a defined target region such that the sound beam is only audible within the defined target region and experiences less than about 20 dB of leakage outside the target region during operation of the media player.

Against this background, it is an object of the present invention to find solutions for personalizing an aircraft cabin audio system.

This object is achieved by an audio system having the features of claim 1 and an aircraft having the features of claim 7.

Thus, one idea of the present invention is to build a personalized audio system being equipped with a combination of directional and standard speakers. The directionality can be used to offer a fully personalized passenger audio system aboard a cabin, which is able to provide individual audio content to each passenger. At the same time the system supports a quiet cabin by avoiding unnecessary sound generation and propagation within the cabin because the individualized audio information is only distributed to those passengers for whom it is actually intended. Audio information relevant for all passengers can still be transmitted via the cabin speaker(s) as it is done in common systems. These cabin speakers can also provide a redundancy channel in case that should be required or helpful. It is to be understood here that the system may generally comprise one or several such cabin speakers as well as one or several such directional speakers.

The system can particularly be used to address each passenger individually with personalized content. For example, audio announcements and/or in-flight entertainment data can be provided to each passenger in the respective native language. For example, the directional speaker could be used to play IFE audio content (i.e. music and films). In addition, other audio information, data and/or signals may be transmitted via such a speaker, e.g. welcome/farewell signals, warning signals, emergency and/or evacuation signals and so on. In one particular example, individualized guiding signals may be distributed to the passengers in case of an emergency depending on their particular cabin zone or even their particular seating position within the zone. Hence, for example, a passenger sitting next to an emergency exit may receive dedicated audio information.

Depending on the technology and configuration of the directional speaker, the sound beam can be emanated such that only the passenger sitting on the recipient seat will be able to hear the audio transmission. Moreover, the system may adapt and/or allow adaptation of a sound volume of the directional speaker to meet each passenger's needs and wishes with regard to convenience and functionality. A sound volume of the directional speaker could be controllable by the passenger in a certain range, e.g. by respective controls in the PSU or in the seat.

Advantageous embodiments and improvements of the present invention are found in the subordinate claims.

According to an embodiment of the invention, the directional speaker may be configured as a parametric speaker to emanate modulated ultrasound signals, which get demodulated to form the sound beam.

Such parametric speakers may comprise a matrix of ultrasound speakers that jointly form a high directional ultrasound beam transporting two ultrasound signals having different waveforms and/or frequencies. Mixture of these ultrasound signals then may demodulate the beam into an audible signal at a receiver's side. Ultrasound is particularly useful for the present invention, as it is beyond human hearing and extremely directional due to lower diffraction compared to audible frequency waves. Modern parametric systems are capable of producing high volume and high quality sound in a well-defined sound corridor. The higher the ultrasonic frequencies used, the narrower the beam. Whereas a typical loudspeaker pushes air, parametric speakers generate an audible signal by modulating the air outside of the speaker, which confines itself to the narrow geography of the ultrasonic beam.

For example, one of the frequencies of the two ultrasound signals may be fixed and the other modulated by an audio signal. In another approach, the phase of the second channel may be modulated. In addition, a single channel of pulse width modulation in the ultrasonic range can generate audible sound. Moreover, a dual sideband method can fulfill this task by modulating a carrier and then removing the carrier.

According to an embodiment of the invention, the directional speaker may be configured to emanate the sound beam selectively on one of several recipient seats of the passenger seats.

In this embodiment, a directional speaker with beam forming and redirecting capabilities can be used, for example, to reach each passenger in a seat row by emanating a corresponding beam into the respective direction of each seat. This can be done simultaneously for several seats. The control device may indicate to the directional speaker which passenger (i.e. which passenger seat) should be addressed and the speaker can steer the beam accordingly.

According to an embodiment of the invention, the directional speaker may be configured to emanate the sound beam on one predetermined recipient seat of the passenger seats.

In this alternative embodiment, one directional speaker can be used for each passenger seat. The directionality hereby prevents that the respective passenger perceives the audio information of other passengers.

According to the invention, the audio system comprises a crew communication device communicatively coupled to the control device. The crew communication device is configured to select and/or create the individualized audio information to be transmitted over the directional speaker. It is to be understood that several such crew communication devices may be provided.

To this end, the crew communication device may be connected to the control device and/or the direction speaker, e.g. via a communication network like a wireless network or similar. The crew communication device may be, for example, a portable computer like a tablet, a smart phone, a smart watch, smart glasses and so on.

In this embodiment, a crew member may (pre-) select certain audio data for transmission to individual passengers. For example, pre-recorded audio messages in several languages may be stored in an audio database connected to the control device and may be selected by the crew members depending on available passenger information for each passenger seat. To this end, the control device may be integrated into a cabin management system (CMS) and may be connected to the speakers via a power and data backbone or power and data bus or the like. The CMS may further provide a wireless communication network adapted to connect crew devices and passenger devices, in particular the network may connect the crew communication device with the directional speaker.

According to the invention, the crew communication device is configured to receive crew voice signals from a crew member and to transmit the crew voice signals as individualized audio information via the directional speaker.

Thus, the audio system may be connected with crew devices so that the crew members can communicate individually with the passengers without being face-to-face and without disturbing the other passengers. For example, the crew communication device may be a mobile device like a tablet or the like, which may be used by a crew member at any position within the passenger cabin to communicate with individual passengers seated somewhere else within the cabin.

According to the invention, the audio system further comprises a passenger microphone. The passenger microphone is communicatively coupled with the crew communication device. The passenger microphone is further configured to receive passenger voice signals from a passenger on the recipient seat and to transmit the received passenger voice signals to the crew communication device.

The passenger microphone may, for example, be integrated into a passenger seat, in particular the recipient seat or the seat in front of the recipient seat. In other embodiments, the microphone may be mounted above the passenger seat within a passenger service unit and/or on an overhead bin/hatrack or the like.

In a similar vein as the crew communication device, the passenger microphone may also be connected to the control device via a data line and/or a wireless communication network. The crew communication device and the passenger microphone may provide a two-way communication channel between crew and individual passengers. The directional speaker, the microphone and/or the passenger service unit may all receive their electric power and data from a respective backbone line of the cabin management system.

According to the invention, the audio system further comprises a real-time voice translator. The real-time voice translator is configured to transform the crew voice signals and/or the passenger voice signals from a source language into a target language before transmission.

The real-time voice translator may be provided as hardware and/or software. For example, the voice translator may be integrated into the control device and/or a cabin management system. The voice translator may however also be a software routine running on the crew communication device and/or respective passenger devices, e.g. a passenger service unit.

According to an embodiment of the invention, the audio system may comprise a plurality of directional speakers to provide each of the passenger seats within the passenger zone with individualized audio information separately from the other passenger seats.

The system can thus be used to offer a fully personalized passenger audio system aboard a cabin being able to provide individual audio content to each passenger and at the same time improve the quietness of the cabin. The cabin management system may be able to distribute individual audio data/signals to each of the speakers. The crew members may steer the distribution via respective crew communication devices or the like.

According to an embodiment of the invention, the crew communication device may be configured to select the recipient seat among the plurality of passenger seats for transmission of the individualized audio information.

The crew may thus select via the crew communication device, e.g. a mobile computer or the like, which passenger should be reached and the corresponding speaker/beam will be activated. The crew may also communicated directly to the respective passenger without disturbing the passenger seated in adjacent seats. An automatic language translation can be done by the cabin management system or an application running on the crew device and/or the passenger service unit to translate in real time the crew-passenger communication. In a similar vein, pre-recorded audio announcements, safety videos and so on can be played in the language selected by the passenger without interfering with the other passengers in the cabin.

According to an embodiment of the invention, the directional speaker and/or the passenger microphone may be mounted to an overhead bin, a passenger service unit, a sidewall lining, a cabin ceiling, a cabin floor and/or a passenger seat within the passenger cabin. Further installation positions comprise a cabin monument, e.g. a galley, a lavatory and so on.

However, the person of skill will readily conceive a suitable position for the directional and cabin speaker(s) depending on the use case at hand. Similarly, the person of skill will readily conceive a suitable positon for the passenger microphone(s).

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.

Fig. 1 schematically depicts a cabin speaker and a directional speaker according to an embodiment of the invention.

Fig. 2 schematically depicts an audio system for a passenger cabin of an aircraft with the speakers of Fig. 1.

Fig. 3 schematically depicts an aircraft having a passenger cabin equipped with the audio system of Fig. 2.

Although specific embodiments are illustrated and described herein, it will be appreciated by those of ordinary skill in the art that a variety of alternate implementations may be substituted for the specific embodiments shown and described without departing from the scope of the present invention. Generally, this application is intended to cover any adaptations or variations of the specific embodiments discussed herein.

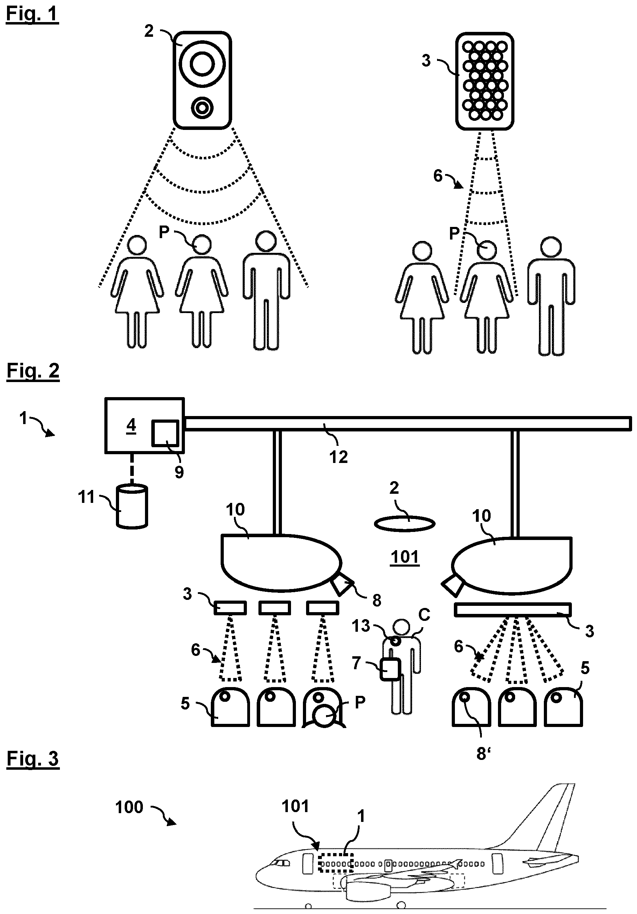

Figure 1 schematically depicts a cabin speaker 2 and a directional speaker 3 as they are employed in an audio system 1 for a passenger cabin 101 according to an embodiment of the invention. The respective audio system 1 is depicted in Fig. 2, while Fig. 3 shows a schematic aircraft 101 with a passenger cabin 101 being equipped with the audio system 1 of Fig. 2.

The audio system 1 makes use of two basic types of audio speakers. On the one hand, the present system 1 employs one or several cabin speakers 2, which are regular audio loudspeakers as they are commonly utilized in passenger cabins for announcements, music, chimes, IFE transmissions and so on (left side in Fig. 1). These cabin speakers 2 are used to transmit general audio information across a passenger zone, e.g. a seat row or cabin area, in which a plurality of passenger seats 5 are arranged. The cabin speakers 2 thus fulfill the same purpose as the regular speakers used conventionally in passenger cabins. The common audio information can thus be perceived by all passengers P in the respective passenger zone or cabin section.

On the other hand, the present system 1 relies on directional speakers 3 to provide individualized and/or personalized audio information to each passenger P individually (right side in Fig. 1). To this end, the directional speakers 3 are configured as parametric speakers having an ultrasound matrix emanating modulated ultrasound signals, which get demodulated into a narrow audible sound beam 6. The audible sound beam 6 can then be directed onto a recipient seat of the passenger seats 5. The sound reproduced by the directional speaker 3 is localized within the beam 6 and is not heard elsewhere, so that the recipient seat 5, and thus the passenger P sitting thereon, can be exposed to individualized audio information carried by the sound beam without other passengers P being disturbed by or even able to listen to the audio information intended for the passenger P on the recipient seat 5. Parametric speakers can be configured such that only one of two people sitting only a few cm (feet) apart from each other is able to hear the directional audio waves emanating from the speaker.

The cabin speakers 2 may be mounted, for example, in a passenger service unit (PSU), an overhead bin, a ceiling, a side wall of the cabin or any other elevated position, from which the sound waves can reach as many seats as possible without obstructions. In the particular example of Fig. 2, one cabin speaker 2 may be installed in a ceiling of the passenger cabin 101. The passenger cabin 101 in this case comprises a passenger zone with two exemplary seat rows, each having three passenger seats 5.

Moreover, the system 1 of Fig. 2 comprises several directional speakers 3. In the left seat row, each passenger seat 5 has a corresponding directional speaker 3 mounted on or at an overhead bin 10 of the seat row. Each of these directional speakers 3 is configured to emanate the sound beam 6 on one predetermined recipient seat of the passenger seats 5. For example, the directional speaker 3 on the outer left in Fig. 2 is configured to emanate a sound beam 6 on the outer most passenger seat 5.

In the right row, only one directional speaker 3 is provided. However, contrary to the left seat row, this directional speaker 3 is configured to emanate a sound beam 6 selectively on one recipient seat of the passenger seats 5 of the right seat row. The directional speaker 3 may be adapted to emanate separate sound beams 6 on each of the passenger seats 5 of the right row at the same time in order to provide each of the passengers P on these seats with individualized audio information.

The individualized audio information may contain various kinds of audio information and/or data. For example, personalized announcements may be communicated to each of the passengers P, which may take certain preferences of the passengers into account. In one particular example, each passenger may receive pre-recorded/stored announcements in a preferred language. Thus, general announcements do not have to be repeated to the whole passenger cabin 101 in different languages but only need to be broadcasted once (personalized for each passenger). Such general announcements may comprise, for example, welcome and farewell messages/chimes, information about the flight and/or the destination and so on.

In another example, music, films and other in-flight entertainment audio information may be transmitted via the directional speakers 3. In that case, each passenger P may listen to individual entertainment audio without having to use headphones. Nonetheless, the individualized audio stream does not interfere with that of the other passengers P, as modern parametric speakers allow a sound beam to be projected over a long distance to be heard only in a small well-defined area such that the sound pressure decreases substantially for a listener outside the designated beam range. This effect cannot be achieved with conventional loudspeakers, because sound at audible frequencies cannot be focused into such a narrow beam. In order to prevent any interruption of the sound beam 6 propagation, the direction speakers 3 can be mounted overhead, e.g. at or near the overhead bins 10, the PSUs and/or the ceiling. Another suitable installation position could be the passenger seat 5 and/or a wall in the front of the recipient seat.

Moreover, other audio information, data and/or signals may be transmitted via such directional speakers 3, e.g. warning signals, emergency and/or evacuation signals and so on. In one particular example, individualized guiding signals may be distributed to the passengers P in case of an emergency depending on a particular cabin zone or a particular seating position within the zone. For example, passengers P sitting next to an emergency exit may receive dedicated audio information.

In order to supply the speakers 2, 3 with power and the audio data, these may be communicatively coupled to and/or integrated in a cabin management system (CMS). In the example of Fig. 2, the CMS comprises a control device 4 that is coupled to the cabin speaker 2 and the directional speakers 3 via a power/data backbone 12, which may be, for example, a bus or the like. The control device 4 is configured to provide the general audio information to the cabin speaker 2 and the individualized audio information to the directional speaker 3. To this end, the control device 4 may comprise and/or be connected to an audio database 11, which amongst others may store pre-recorded audio messages in several languages. It is to be understood however, that the power and/or audio/data connection between these devices may be accomplished via a contactless and/or wireless transmission technology. For example, the CMS may provide a wireless network able to connect the passengers with the CMS and/or with the crew, e.g. via respective passenger control devices (e.g. the PSU) and crew devices (e.g. a tablet or other portable computer).

The control device 4, and thus the CMS, is able to distribute individual audio sources to each of the directional speakers 3, wherein the directionality of the speakers 3 prevents that passengers P can listen to the audio of other passengers P. The transmission and attribution of personalized audio information may be steered by the crew of the aircraft 100, e.g. via a crew communication device 7 being connected to the control device 4. The crew communication device 7 may be particularly configured to select the recipient seat among the plurality of passenger seats 5 for transmission of the individualized audio information.

The crew communication device 7 may for example be a portable device, e.g. a portable computer like a tablet, smart phone or the like, which can be carried by the crew members C (cf. Fig. 2). In that case, the crew communication device 7 may be connected to a wireless network provided by the CMS, over which it may access the control device 4 and/or the speakers 2, 3. However, alternatively or additionally, the crew communication device 7 may also be an operating terminal that is installed within or outside of the passenger cabin 101, e.g. in a galley etc.

In addition to being able to select the individualized audio information to be transmitted over the directional speaker 3, the crew communication device 7 is further configured to create individualized audio information. The crew communication device 7 is configured to receive crew voice signals from a crew member C and to transmit the crew voice signals as individualized audio information via the directional speaker 3. To this end, the crew communication device 7 may be provided with and/or connected with a crew microphone 13, over which the crew members C can address a passenger P sitting on a recipient seat of one of the directional speakers 3.

A real-time voice translator 9 is provided on the crew communication device 7, the CMS (e.g. the control device 4) and/or the directional speaker 3 for transforming the crew voice signals from spoken language of the crew member C into a preferred language of the respective passenger P. Using such a real-time voice translator 9, also pre-recorded audio announcements and safety videos can be played via the directional speaker 3 in the language selected by the passenger P without interfering with the other passengers P in the passenger cabin 101.

In order to facilitate two-sided communication between the passengers P and the crew members C, the system 1 further comprises passenger microphones 8, 8' communicatively coupled with the crew communication device 7 and configured to receive passenger voice signals from a passenger P on the recipient seat and to transmit the received passenger voice signals to the crew communication device 7. In the example of Fig. 2, each seat row comprises a passenger microphone 8 installed in the overhead bin 10. In addition, the exemplary embodiment of Fig. 2 provides passenger microphones 8' in each passenger seat 5. In combination with the crew microphone 13, these devices allow direct communication of the crew with a selected passenger and vice versa.

The crew member C can select via the crew communication device 7 which passenger P should be reached, and the corresponding directional speaker 3 or beam 6 will be activated. Automatic translation of this interaction is done in real time by the real-time voice translator 9, e.g. a software application within the CMS or a third-party application installed on the crew communication device 7. The passenger P may be able to control volume and other aspects of the audio connection via a corresponding passenger control device (not shown in Fig. 2) installed in and/or close to the seat 5, e.g. in the overhead bin 10 or a PSU.

In summary, the present system 1 offers a personalized audio solution featuring a combination of parametric (or directional) speakers 3 and standard speakers as well as microphones 8, 8', 13. The system 1 may be integrated in a cabin management system 1 or connected to such a system and may be steered by crew communication devices 7 in order to offer individualized and/or personalized audio content to selected passengers P. As only the passenger P below the or pointed by the respective speaker 3 will hear the audio, noise disturbance within the cabin 101 can be kept low despite the fact that all of the audio is transferred through the space of the cabin.

The audio system 1 supports wide personalization of the audio content provided to the passengers P. In addition, the control of the audio signal characteristics (as e.g. volume, location) can be highly customized for the overall cabin without interfering between passengers.

In principle, the audio system 1 is not restricted to a communication between passengers P and crew members C. In addition, the system 1 may be used for face-to-face communication from passenger P to passenger P and/or from crew member C to crew member C. For example, a direct communication channel may be provided between two passengers P via their respective passenger microphones 8, 8' and directional speakers 3. In a similar vein, directional speakers 3 may be installed at other places within the cabin 101, e.g. in a galley, lavatory, crew seats and so on, so that also the crew members C may be able to communicate with each other via directional speakers 3 and corresponding crew microphones 13. For example, a crew member C in the front of the aircraft may communicated with another crew member C at the back of the aircraft.

In the foregoing detailed description, various features are grouped together in one or more examples or examples with the purpose of streamlining the disclosure. It is to be understood that the above description is intended to be illustrative, and not restrictive. While the above description intends to cover all alternatives and modifications, the invention is defined by the appended claims.

### List of reference signs

- 1: audio system
- 2: cabin speaker
- 3: directional speaker
- 4: control device
- 5: passenger seat
- 6: sound beam
- 7: crew communication device
- 8, 8': passenger microphone
- 9: real-time voice translator
- 10: overhead bin
- 11: audio database
- 12: power and data backbone
- 13: crew microphone
- P: passenger
- C: crew member
- 100: aircraft
- 101: passenger cabin

## Claims

1. Audio system (1) for a passenger cabin (101) of an aircraft (100), comprising:
a cabin speaker (2) configured to transmit general audio information across a passenger zone, the passenger zone having a plurality of passenger seats (5) arranged therein;
a directional speaker (3) configured to emanate a sound beam (6) onto a recipient seat of the plurality of passenger seats (5) such that the recipient seat is exposed to individualized audio information carried by the sound beam (6);
a control device (4) communicatively coupled with the cabin speaker (2) and the directional speaker (3) and configured to provide the general audio information to the cabin speaker (2) and the individualized audio information to the directional speaker (3); **characterised in that** the audio system further comprises:
a crew communication device (7) communicatively coupled to the control device (4) and configured to at least one of select and create the individualized audio information to be transmitted over the directional speaker (3), wherein the crew communication device (7) is configured to receive crew voice signals from a crew member (C) and to transmit the crew voice signals as individualized audio information via the directional speaker (3);
a passenger microphone (8, 8') communicatively coupled with the crew communication device (7) and configured to receive passenger voice signals from a passenger (P) on the recipient seat and to transmit the received passenger voice signals to the crew communication device (7); and
a real-time voice translator (9) configured to transform at least one of the crew voice signals and the passenger voice signals from a source language into a target language before transmission.

2. Audio system (1) according to claim 1, wherein the directional speaker (3) is configured as a parametric speaker to emanate modulated ultrasound signals, which get demodulated to form the sound beam (6).

3. Audio system (1) according to claim 1 or 2, wherein the directional speaker (3) is configured to emanate the sound beam (6) selectively on one of several recipient seats of the passenger seats (5).

4. Audio system (1) according to claim 1 or 2, wherein the directional speaker (3) is configured to emanate the sound beam (6) on one predetermined recipient seat of the passenger seats (5).

5. Audio system (1) according to one of the claims 1 to 4, wherein the audio system (1) comprises a plurality of directional speakers (3) to provide each of the passenger seats (5) within the passenger zone with individualized audio information separately from the other passenger seats (5).

6. Audio system (1) according to claim 5, wherein the crew communication device (7) is configured to select the recipient seat among the plurality of passenger seats (5) for transmission of the individualized audio information.

7. Aircraft (100) having a passenger cabin (101) equipped with an audio system (1) according to one of the claims 1 to 6.

8. Aircraft (100) according to claim 7, wherein at least one of the directional speaker (3) and the passenger microphone (8, 8') is mounted to at least one of an overhead bin (10), a passenger service unit, a sidewall lining, a cabin ceiling, a cabin floor or a passenger seat within the passenger cabin.

## Patentansprüche

1. Audiosystem (1) für eine Passagierkabine (101) eines Flugzeugs (100), umfassend:
einen Kabinenlautsprecher (2), der ausgestaltet ist, um allgemeine Audioinformationen über einen Passagierbereich zu übermitteln, wobei der Passagierbereich eine Vielzahl von darin angeordneten Passagiersitzen (5) aufweist;
einen Richtlautsprecher (3), der ausgestaltet ist, um eine Schallkeule (6) auf einen Empfängersitz von der Vielzahl der Passagiersitze (5) auszustrahlen, so dass der Empfängersitz individualisierten Audioinformationen ausgesetzt wird, die von der Schallkeule (6) getragen werden;
eine Steuervorrichtung (4), die kommunikativ mit dem Kabinenlautsprecher (2) und dem Richtlautsprecher (3) gekoppelt und ausgestaltet ist, um dem Kabinenlautsprecher (2) die allgemeinen Audioinformationen und dem Richtlautsprecher (3) die individualisierten Audioinformationen bereitzustellen;
**dadurch gekennzeichnet, dass** das Audiosystem des Weiteren umfasst:
eine Besatzungskommunikationsvorrichtung (7), die kommunikativ an die Steuervorrichtung (4) gekoppelt und ausgestaltet ist, um mindestens eines von Auswählen und Erstellen der individualisierten Audioinformationen vorzunehmen, die über den Richtlautsprecher (3) übermittelt werden sollen, wobei die Besatzungskommunikationsvorrichtung (7) ausgestaltet ist, um Besatzungssprachsignale von einem Besatzungsmitglied (C) zu empfangen und die Besatzungssprachsignale als individualisierte Audioinformationen über den Richtlautsprecher (3) zu übermitteln;
ein Passagiermikrofon (8, 8'), das kommunikativ mit der Besatzungskommunikationsvorrichtung (7) gekoppelt und ausgestaltet ist, um Passagiersprachsignale von einem Passagier (P) auf dem Empfängersitz zu empfangen und die empfangenen Passagiersprachsignale an die Besatzungskommunikationsvorrichtung (7) zu übermitteln; und
einen Echtzeit-Sprachübersetzer (9), der ausgestaltet ist, um mindestens eines von den Besatzungssprachsignalen und den Passagiersprachsignalen vor der Übermittlung von der Quellsprache in eine Zielsprache umzuwandeln.

2. Audiosystem (1) nach Anspruch 1, wobei der Richtlautsprecher (3) als parametrischer Lautsprecher ausgestaltet ist, um modulierte Ultraschallsignale auszustrahlen, die demoduliert werden, um die Schallkeule (6) zu bilden.

3. Audiosystem (1) nach Anspruch 1 oder 2, wobei der Richtlautsprecher (3) ausgestaltet ist, um die Schallkeule (6) selektiv an einen von mehreren Empfängersitzen von den Passagiersitzen (5) auszustrahlen.

4. Audiosystem (1) nach Anspruch 1 oder 2, wobei der Richtlautsprecher (3) ausgestaltet ist, um die Schallkeule (6) an einen vorbestimmten Empfängersitz von den Passagiersitzen (5) auszustrahlen.

5. Audiosystem (1) nach einem der Ansprüche 1 bis 4, wobei das Audiosystem (1) eine Vielzahl von Richtlautsprechern (3) umfasst, um jedem der Passagiersitze (5) innerhalb der Passagierbereich separat von den anderen Passagiersitzen (5) individualisierte Audioinformationen bereitzustellen.

6. Audiosystem (1) nach Anspruch 5, wobei die Besatzungskommunikationsvorrichtung (7) ausgestaltet ist, um den Empfängersitz innerhalb der Vielzahl von Passagiersitzen (5) für die Übermittlung der individualisierten Audioinformationen auszuwählen.

7. Flugzeug (100) mit einer Passagierkabine (101), die mit einem Audiosystem (1) gemäß einem der Ansprüche 1 bis 6 ausgestattet ist.

8. Flugzeug (100) nach Anspruch 7, wobei mindestens einer von dem Richtlautsprecher (3) und dem Passagiermikrofon (8, 8') an mindestens einem von einem Gepäckfach (10), einer Passenger Service Unit (PSU), einer Seitenwandverkleidung, einer Kabinendecke, einem Kabinenboden oder einem Passagiersitz innerhalb der Passagierkabine montiert ist.

## Revendications

1. Système audio (1) destiné à une cabine de passagers (101) d'un avion (100), le système comprenant :
un haut-parleur de cabine (2) configuré pour transmettre des informations audio générales à travers une zone de passagers, la zone de passagers ayant une pluralité de sièges de passagers (5) disposés à l'intérieur ;
un haut-parleur directionnel (3) configuré pour faire émaner un faisceau sonore (6) sur un siège de destinataire de la pluralité de sièges de passagers (5) de sorte que le siège de destinataire soit exposé à des informations audio individualisées portées par le faisceau sonore (6) ;
un dispositif de commande (4) couplé de manière communicative avec le haut-parleur de cabine (2) et le haut-parleur directionnel (3), et configuré pour fournir les informations audio générales au haut-parleur de cabine (2) et les informations audio individualisées au haut-parleur directionnel (3) ;
le système audio étant **caractérisé en ce qu'**il comprend en outre :
un dispositif de communication d'équipage (7) couplé de manière communicative au dispositif de commande (4) et configuré pour procéder au moins à l'une de la sélection et de la création des informations audio individualisées à transmettre sur le haut-parleur directionnel (3), où le dispositif de communication d'équipage (7) est configuré pour recevoir des signaux vocaux d'équipage d'un membre d'équipage (C) et pour transmettre les signaux vocaux d'équipage en tant qu'informations audio individualisées par l'intermédiaire du haut-parleur directionnel (3) ;
un microphone de passager (8, 8') couplé de manière communicative avec le dispositif de communication d'équipage (7) et configuré pour recevoir des signaux vocaux de passager d'un passager (P) au niveau du siège de destinataire, et pour transmettre les signaux vocaux de passager reçus au dispositif de communication de l'équipage (7) ; et
un traducteur vocal en temps réel (9) configuré pour transformer au moins un des signaux vocaux d'équipage et des signaux vocaux de passager d'une langue source en une langue cible avant la transmission.

2. Système audio (1) selon la revendication 1, dans lequel le haut-parleur directionnel (3) est configuré comme un haut-parleur paramétrique pour faire émaner des signaux ultrasonores modulés, qui sont démodulés pour former le faisceau sonore (6).

3. Système audio (1) selon la revendication 1 ou la revendication 2, dans lequel le haut-parleur directionnel (3) est configuré pour faire émaner le faisceau sonore (6) de manière sélective au niveau d'un siège parmi plusieurs sièges de destinataires des sièges de passagers (5) .

4. Système audio (1) selon la revendication 1 ou la revendication 2, dans lequel le haut-parleur directionnel (3) est configuré pour faire émaner le faisceau sonore (6) au niveau d'un siège de destinataire prédéterminé des sièges de passagers (5).

5. Système audio (1) selon l'une des revendications 1 à 4, dans lequel le système audio (1) comprend une pluralité de haut-parleurs directionnels (3) pour fournir à chacun des sièges de passagers (5) au sein de la zone de passagers des informations audio individualisées de manière séparée par rapport aux autres sièges de passagers (5).

6. Système audio (1) selon la revendication 5, dans lequel le dispositif de communication de l'équipage (7) est configuré pour sélectionner le siège de destinataire parmi la pluralité de sièges de passagers (5) pour la transmission des informations audio individualisées.

7. Aéronef (100) comprenant une cabine de passagers (101) équipée d'un système audio (1) selon l'une des revendications 1 à 6.

8. Aéronef (100) selon la revendication 7, dans lequel au moins l'un parmi le haut-parleur directionnel (3) et le microphone de passager (8, 8') est monté sur au moins l'un parmi un coffre supérieur (10), une unité de service de passager, un revêtement de paroi latérale, un plafond de cabine, un plancher de cabine ou un siège de passager à l'intérieur de la cabine de passagers.
